(19) Europäisches Patentamt
European Patent Office
Office européen des brevets

(11) **EP 4 746 283 A1**

(12) **EUROPEAN PATENT APPLICATION**
published in accordance with Art. 153(4) EPC

(43) Date of publication:
**20.05.2026   Bulletin 2026/21**

(21) Application number: **24847583.2**

(22) Date of filing: **15.03.2024**

(51) International Patent Classification (IPC):
**H02P 21/22** (2016.01)     **H01M 10/615** (2014.01)

(86) International application number:
**PCT/CN2024/081996**

(87) International publication number:
**WO 2025/025617 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **31.07.2023   CN 202310957910
08.11.2023   CN 202311487424**

(71) Applicant: **Huawei Digital Power Technologies
Co., Ltd.
Shenzhen, Guangdong 518043 (CN)**

(72) Inventors:
• **CAO, Sen**
  **Shenzhen, Guangdong 518043 (CN)**
• **JIANG, Feng**
  **Shenzhen, Guangdong 518043 (CN)**
• **XU, Yankun**
  **Shenzhen, Guangdong 518043 (CN)**

(74) Representative: **Maiwald GmbH
Engineering
Elisenhof
Elisenstrasse 3
80335 München (DE)**

(54)    **MOTOR CONTROLLER AND POWERTRAIN**

(57)    This application provides a motor controller and a powertrain. The motor controller includes an inverter circuit. The inverter circuit includes a three-phase switching transistor bridge arm. Each bridge arm midpoint of each switching transistor bridge arm is configured to connect to one phase winding of a drive motor. Bridge arm midpoints of the three-phase switching transistor bridge arm of the inverter circuit are configured to output a three-phase current to a winding of the drive motor. Frequencies of each phase current of the three-phase current in any two adjacent cycles are different. Because the frequencies of each phase current in the any two adjacent cycles are different, it is equivalent that frequencies of each phase current flowing through the winding of the drive motor are also different, and vibration frequencies generated by each winding under an action of a phase current are also different. Therefore, noise energy generated by vibrations may be dispersed to a wide frequency range, so that noise generated when a power battery is heated is reduced, to provide better use experience for a user.

FIG. 3

**Description**

**CROSS-REFERENCE TO RELATED APPLICATION**

This application claims priorities to Chinese Patent Application No. 202310957910.8, filed with the China National Intellectual Property Administration on July 31, 2023 and entitled "MOTOR CONTROLLER, POWERTRAIN, AND ELECTRIC VEHICLE", and to Chinese Patent Application No. 202311487424.0, filed with the China National Intellectual Property Administration on November 8, 2023 and entitled "MOTOR CONTROLLER, POWERTRAIN, AND ELECTRIC VEHICLE", both of which are incorporated herein by reference in their entireties.

**TECHNICAL FIELD**

This application relates to the field of battery heating, and in particular, to a motor controller and a powertrain.

**BACKGROUND**

In a low-temperature environment, charging and discharging capabilities of a power battery of an electric vehicle decrease sharply. Therefore, the power battery needs to be heated, to enable the electric vehicle to travel normally. Currently, there are various common heating manners: positive temperature coefficient (positive temperature coefficient ceramic heating mode, PTC) heating, active heating by a motor, and the like. In all of the foregoing heating manners, the battery is heated by heating a water loop. However, a heating rate is not high, affecting user experience.

In addition, the power battery can also be heated in a high-frequency pulse-heating manner. In this manner, a powertrain is mainly used to charge and discharge the power battery with a high-frequency alternating current, to heat the battery by using heat generated by internal resistance of the battery. A pulse alternating current is implemented by injecting a high-frequency voltage. The high-frequency voltage is applied to a winding of a motor, and consequently a high-frequency magnetic field with a same frequency as the injected voltage is generated. In this case, the motor is similar to an acoustic device in that the winding of the motor generates high-frequency vibrations under an action of a high-frequency signal, generating noise. Due to a monotonous frequency of the injected signal, the generated noise is sharp and piercing. In view of this, noise needs to be reduced during a heating process to optimize user experience.

**SUMMARY**

High-frequency pulse-heating is increasingly paid attention to as a manner of heating a power battery. A specific process of high-frequency pulse-heating of the power battery includes: A motor controller generates a high-frequency pulse alternating current on a bridge arm circuit. The high-frequency pulse alternating current generates heat on internal resistance of the power battery when passing through the power battery to heat the power battery. A high-frequency pulse alternating current generated by a winding of a drive motor may change rapidly in an extremely short time. The rapidly changing current may generate a changing electromagnetic field on the winding. The electromagnetic field may cause high-frequency vibrations of the winding. The high-frequency vibrations may cause each part of the winding to vibrate at a small amplitude. In this case, the drive motor is similar to an acoustic device, generating noise. Because a frequency of a high-frequency voltage signal is fixed, finally generated noise also has a fixed frequency. If the frequency is within a frequency range that can be heard by a human ear, the noise is perceived as a sharp and piercing sound, bringing poor user experience. To resolve this problem, this application provides a motor controller and a powertrain.

According to a first aspect, this application provides a motor controller. The motor controller includes an inverter circuit. The inverter circuit includes a three-phase switching transistor bridge arm. Each bridge arm midpoint of each switching transistor bridge arm is configured to connect to one phase winding of a drive motor. Bridge arm midpoints of the three-phase switching transistor bridge arm of the inverter circuit are configured to output a three-phase current to a winding of the drive motor. Frequencies of each phase current of the three-phase current in any two adjacent cycles are different.

Because the frequencies of each phase current in the any two adjacent cycles are different, it is equivalent that frequencies of each phase current flowing through the winding of the drive motor are also different, and vibration frequencies generated by each winding under an action of a rapidly changing current are also different. Therefore, if the frequencies in the any two adjacent cycles are different, noise generated by the winding of the drive motor in the two adjacent cycles also has at least two different frequencies. In addition, because duration of each cycle is quite short, noise energy generated by vibrations may be dispersed to a wide frequency range, so that noise perception at a specific frequency is mitigated, to provide better use experience for a user.

In a possible implementation, the motor controller is configured to control amplitudes of each phase current of the three-phase current in the any two adjacent cycles to be the same. If amplitudes of a bus current in the any two adjacent cycles may maintain the same, heating power of a power battery is also stable under an action of the bus current, so that a heating process of the power battery can be optimized.

To further reduce the noise, in a possible implementation, the motor controller is configured to control frequencies of each phase current of the three-phase current in a positive half-cycle and a negative half-cycle that are in one cycle to be different. In this manner, the noise energy generated by vibrations may be more evenly dispersed to a wide frequency range, so that noise perception at a specific frequency is further mitigated.

In a possible implementation, a waveform of each phase current of the three-phase current is a unipolar waveform.

In a possible implementation, a waveform of each phase current of the three-phase current is a unipolar triangular wave.

In a possible implementation, the inverter circuit is configured to connect to a power battery through a direct current bus. The inverter circuit is configured to generate a pulse alternating current on the direct current bus. Frequencies of the pulse alternating current in the any two adjacent cycles are different.

In a possible implementation, in response to that a temperature of the power battery is less than a preset value, the motor controller is configured to output the three-phase current. The three-phase current is used to generate the pulse alternating current on the direct current bus, and the pulse alternating current is used to heat the power battery.

The motor controller provided in this application outputs the three-phase current when the temperature of the power battery is low. The three-phase current may generate the pulse alternating current on the direct current bus to repeatedly charge and discharge the power battery. The pulse alternating current generates heat on internal resistance of the power battery to heat the battery from an interior of the power battery.

In a possible implementation, amplitudes of different bus currents in the any two adjacent cycles are the same.

In a possible implementation, frequencies of a direct-axis current component of the three-phase current in the any two adjacent cycles are different.

In a possible implementation, the direct-axis current component of the three-phase current has a direct current bias. The direct current bias is a positive direct current bias or a negative direct current bias. A direct-axis voltage signal having a direct current bias can improve an effective value of the three-phase current of the drive motor to improve heating efficiency of the power battery.

In a possible implementation, volt-second products of the direct-axis current signals of different frequencies are the same. If the volt-second products of the direct-axis current signals are the same, stability of heating power of the power battery can be ensured.

In a possible implementation, the direct-axis current signals of different frequencies include at least one of the following types: a sine wave, a triangular wave, and a square wave.

To further reduce the noise, in a possible implementation, the direct-axis current signals of different frequencies include a first direct-axis current signal and a second direct-axis current signal. Frequencies of the first direct-axis current signal and the second direct-axis current signal are different, and volt-second products of the first direct-axis current signal and the second direct-axis current signal are the same. In this manner, the noise energy generated by vibrations may be more evenly dispersed to a wide frequency range, so that noise perception at a specific frequency is further mitigated.

In a possible implementation, a current signal of the direct-axis current component of the three-phase current in any cycle is any one of the following: a first type of signal, a second type of signal, a third type of signal, and a fourth type of signal.

The first type of signal is the first direct-axis current signal. The second type of signal is the second direct-axis current signal. The third type of signal is a signal formed by a positive half-cycle of the first direct-axis current signal and a negative half-cycle of the second direct-axis current signal. The fourth type of signal is a signal formed by a negative half-cycle of the first direct-axis current signal and a positive half-cycle of the second direct-axis current signal.

In a possible implementation, current signals of a direct-axis current of the three-phase current in the any two adjacent cycles are any two of the following: the first type of signal, the second type of signal, the third type of signal, and the fourth type of signal.

In a possible implementation, a quadrature-axis current component of the three-phase current is less than a preset value, and the three-phase current causes torque output by the drive motor to be less than a preset torque value. The quadrature-axis current component of the three-phase current provided in this embodiment of this application is less than the preset value, to avoid affecting ride experience of the electric vehicle due to vibrations and noise generated through unexpected torque being transmitted to a wheel.

In a possible implementation, the motor controller includes a control circuit. The control circuit is configured to output a control signal to the inverter circuit. The control signal is used to control the inverter circuit to output the three-phase current. The control signal is used to: indicate a frequency and an amplitude of the direct-axis current component of the three-phase current, and indicate that the quadrature-axis current component of the three-phase current is zero.

According to a second aspect, this application provides a powertrain. The powertrain includes a heat transfer loop. A three-phase current is used to heat a winding of a drive motor. The heat transfer loop is configured to conduct heat of the winding of the drive motor to a power battery.

According to a third aspect, this application provides an electric vehicle. The electric vehicle includes a power battery, a wheel, and a power apparatus. The power apparatus includes a three-phase motor and the motor controller according to any one of the first aspect. The motor controller is configured to receive power supplied by the power battery to drive the three-phase motor to drive the wheel or output a three-phase current to heat the power battery. Alternatively, the power apparatus includes the powertrain according to any one of the second aspect. The powertrain is configured to receive the power supplied by the power battery to drive the wheel or heat the power battery.

## BRIEF DESCRIPTION OF DRAWINGS

FIG. 1 is a diagram of a structure of an electric vehicle according to an embodiment of this application;
FIG. 2 is a diagram of a powertrain according to an embodiment of this application;
FIG. 3 is a diagram of a motor controller according to an embodiment of this application;
FIG. 4 is a diagram of operation of a motor controller according to an embodiment of this application;
FIG. 5 is a diagram of a voltage reference signal according to an embodiment of this application;
FIG. 6 is a diagram of waveforms of a first direct-axis current signal, a second direct-axis current signal, and a first type of signal to a fourth type of signal;
FIG. 7 is a diagram of a waveform of a unipolar triangular wave;
FIG. 8 is a diagram of another powertrain according to an embodiment of this application; and
FIG. 9 is a diagram of another powertrain according to an embodiment of this application.

## DESCRIPTION OF EMBODIMENTS

The following describes the technical solutions in specific implementations of this application with reference to accompanying drawings in implementations. Before specific content of the technical solutions is described, terms used in this application are first briefly described.

In this specification and claims, the words "first", "second", "third", and the like or similar words such as a module A, a module B, and a module C are merely used to distinguish between similar objects, and do not represent a specific order of the objects. It may be understood that specific orders or sequences may be exchanged if permitted, so that embodiments of this application described herein can be implemented in an order other than an order illustrated or described herein.

The term "include" used in this specification and claims should not be construed as being limited to the content listed below, and does not exclude other elements or steps. It should be construed as specifying existence of a mentioned feature, whole, step, or part, but does not exclude existence or addition of one or more other features, wholes, steps, or parts and their groups. Therefore, the expression "a device including an apparatus A and an apparatus B" should not be limited to a device including only the components A and B.

"One embodiment" or "an embodiment" mentioned in this specification means that a particular feature, structure, or characteristic described in combination with this embodiment is included in at least one embodiment of this application. Therefore, the expression "in one embodiment" or "in an embodiment" appearing throughout this specification does not necessarily indicate a same embodiment, but may indicate a same embodiment. Further, in one or more embodiments, the particular feature, structure, or characteristic can be combined in any proper manner, as will be clear from the present disclosure to a person of ordinary skill in the art.

Unless otherwise defined, all technical and scientific terms used in this specification have same meanings as those usually understood by a person skilled in the art of this application. In case of any inconsistency, the meaning described in this specification or the meaning obtained according to the content recorded in this specification shall be used. In addition, the terms used in this specification are merely for the purpose of describing embodiments of this application, but are not intended to limit this application.

Currently, a motor of an electric vehicle is usually an alternating current motor, and a power battery is a direct current source. Therefore, a direct current output by the power battery is converted into a three-phase alternating current of the motor through an inverter circuit. Coordinate axes of the three-phase alternating current are separately a U-axis, a V-axis, and a W-axis. Three phases of the alternating current may also be separately referred to as a U phase, a V phase, and a W phase. To simplify analysis of the motor, a stationary three-phase coordinate is usually transformed into a rotating d-q coordinate. Such transformation is Park transformation (Park transformation). In a d-q coordinate system, three coordinate axes are separately referred to as a direct axis, a quadrature axis, and a zero axis.

The direct axis (direct axis) is also referred to as a D axis or a d-axis, and is a time-varying direct current coordinate axis obtained from a stationary U/V/W three-phase coordinate axis through Park transformation.

The quadrature axis (quadrature axis) is also referred to as a Q axis or a q-axis, and is a time-varying quadrature current coordinate axis obtained from the stationary U/V/W three-phase coordinate axis through Park transformation.

The zero axis is also referred to as a 0 axis or a 0-axis, and is a coordinate axis perpendicular to a d-q plane on which the direct axis and the quadrature axis are located.

Specifically, a formula for the Park transformation may be as follows:

$$\begin{bmatrix} I\_d \\ I\_q \\ I\_0 \end{bmatrix} = \frac{2}{3} \begin{bmatrix} \cos(\theta) & \cos(\theta - 2\pi/3) & \cos(\theta + 2\pi/3) \\ -\sin(\theta) & -\sin(\theta - 2\pi/3) & -\sin(\theta + 2\pi/3) \\ 1/2 & 1/2 & 1/2 \end{bmatrix} \begin{bmatrix} I\_u \\ I\_v \\ I\_w \end{bmatrix}$$

$\theta$ is an included angle between the d-axis and the U-axis. I_d is referred to as a direct-axis current, and is mainly used to adjust a magnetic field. I_q is referred to as a quadrature-axis current, and is mainly used to adjust torque. I_0 is referred to as a zero-sequence current. I_u, I_v, and I_w are respectively currents on the U-axis, the V-axis, and the W-axis, namely, a three-phase current.

The foregoing matrix is an expression for transforming the three-phase current into I_d, I_q, and I_0. An expression for transforming I_d, I_q, and I_0 into the three-phase current may be obtained through inverse matrix transformation. Details are not described herein.

The three-phase current is a current corresponding to a winding of the motor. Therefore, during output of currents to a direct axis of the motor, a motor controller needs to convert, through inverse Park transformation, I_d into a three-phase current: I_u, I_v, and I_w, and feed I_u, I_v, and I_w into the winding of the motor. Alternatively, during output of currents to a zero axis of the motor, the motor controller needs to convert, through inverse Park transformation, I_0 into the three-phase current: I_u, I_v, and I_w, and feed I_u, I_v, and I_w into the winding of the motor. A quadrature-axis voltage/current is used to control torque output by a drive motor. A direct-axis voltage/current is used to control a direction and a magnitude of a magnetic field generated by the drive motor.

The electric vehicle includes a drive motor, a motor controller, and a power battery. The motor controller receives electric energy of the power battery and supplies power to the drive motor. The drive motor is configured to drive a wheel of the electric vehicle to rotate, so that the electric vehicle travels.

A temperature has a great impact on the power battery. A lithium plating phenomenon may occur when the power battery is charged and discharged at a low temperature. This may cause a power battery capacity to decrease and even cause a power battery safety risk. Therefore, the electric vehicle is allowed to travel only after the power battery is first heated to a specific temperature.

Currently, three manners for heating the power battery are mainly used.

A manner of heating the power battery is heating the power battery by using an external heating system. For example, a power battery thermal loop is disposed outside the power battery, and the power battery thermal loop has a hot-carrying fluid that carries heat. A positive temperature coefficient (PTC) resistor heats the hot-carrying fluid in the power battery thermal loop. The hot-carrying fluid in the power battery thermal loop conducts heat to the power battery to heat the power battery. In the foregoing manner, the hot-carrying fluid in the power battery thermal loop needs to be first heated, and then the power battery is heated by using the hot-carrying fluid in the power battery thermal loop. Therefore, a heat transfer path is long, and heating efficiency is low.

A manner of heating the power battery is performing electric drive active heating. In the electric drive active heating manner, an excitation current of the motor is used to generate heat on the drive motor to heat the power battery. The motor controller outputs the three-phase alternating current to the drive motor. The three-phase alternating current causes the torque of the drive motor to be zero. The excitation current generates heat on a winding of the drive motor. The heat generated on the drive motor is conducted to the power battery by using a heat conduction apparatus between the drive motor and the power battery for heating. In the foregoing manner, the heat of the drive motor needs to be conducted to the power battery by using the heat conduction apparatus. Therefore, the foregoing heating manner has disadvantages of a long heat transfer path, a low heating rate of the power battery, and low heating efficiency.

A manner of heating the power battery is performing high-frequency pulse-heating. In the high-frequency pulse-heating manner, a high-frequency pulse alternating current generated by the motor controller is used to heat the power battery. A motor controller bridge arm circuit generates the high-frequency pulse alternating current. The high-frequency pulse alternating current generates heat on internal resistance of the power battery when passing through the power battery, to heat the power battery. The high-frequency heating manner has an advantage of a high heating rate and is widely focused.

Three phase currents are superimposed, so that the pulse alternating current generated by the motor controller is formed. To implement a high-frequency pulse alternating current, a high-frequency voltage signal may be injected into a control circuit in the motor controller to control three bridge arm circuits. First, the high-frequency voltage signal may be converted into a control signal, and the three bridge arm circuits of the motor controller are controlled by using the control signal. When the winding of the drive motor is under an action of the control signal converted from the high-frequency voltage signal, because a cycle of the control signal is quite short, the current flowing through the winding of the drive motor may change rapidly in an extremely short time. The rapidly changing current may generate a changing electromagnetic field on the winding. The electromagnetic field may cause high-frequency vibrations of the winding. The high-frequency vibrations may cause each part of the winding to vibrate at a small amplitude. The vibrations of a small amplitude are converted into a sound wave through resonance and friction of the material and air conduction. In this case, the drive motor is similar to an acoustic device, generating noise. Because a frequency of the high-frequency voltage signal is fixed, finally generated noise also has a fixed frequency. If the frequency is within a frequency range that can be heard by a human ear, the noise is perceived as a sharp and piercing sound, bringing poor user experience.

In view of this, embodiments of this application provide a motor controller, a powertrain, and an electric vehicle. The motor controller provided in embodiments of this application controls a frequency of each phase current of a three-phase current, to optimize high-frequency noise in a heating process of a power battery, improving user experience.

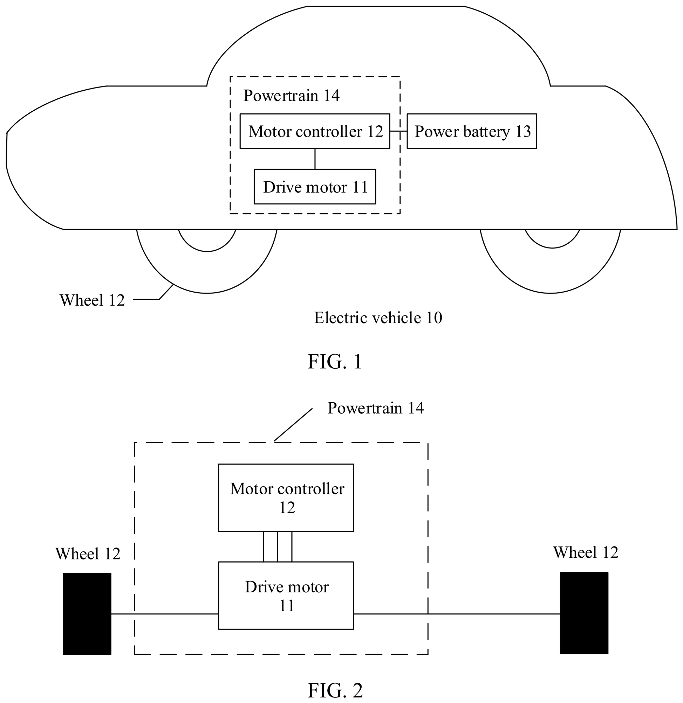

FIG. 1 is a diagram of an electric vehicle 10 according to an embodiment of this application. As shown in FIG. 1, the electric vehicle 10 includes a wheel 12, a power battery 13, and a powertrain 14. The powertrain 14 is configured to receive power supplied by the power battery 13 to drive the wheel 12 or is configured to heat the power battery 13.

FIG. 2 is a diagram of the powertrain 14 according to an embodiment of this application. As shown in FIG. 2, the powertrain 14 includes a drive motor 11 and a motor controller 12. The motor controller 12 receives a direct current of the power battery, converts the direct current into a three-phase alternating current, and then supplies power to the drive motor 11. The drive motor 11 is connected to the wheel 12 by using a reducer or a speed converter through transmission. In a traveling process of the electric vehicle 10, torque of the drive motor 11 is transmitted to the wheel 12 to provide power for the electric vehicle 10.

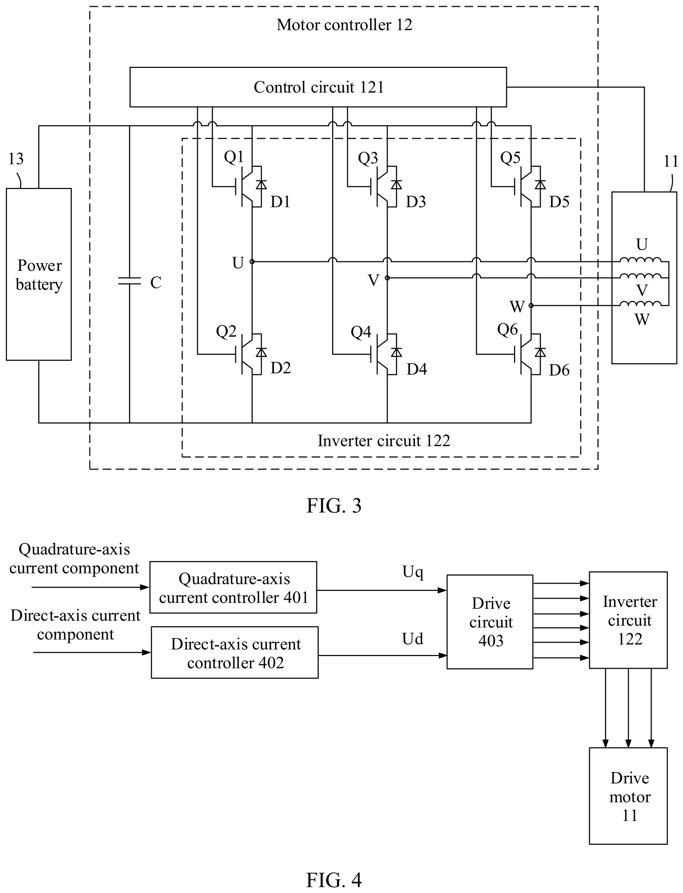

FIG. 3 is a diagram of the motor controller 12 according to an embodiment of this application. As shown in FIG. 3, the motor controller 12 includes a control circuit 121, an inverter circuit 122, and a bus capacitor C. One end of the bus capacitor C is configured to connect to a positive electrode of the power battery 13, and the other end of the bus capacitor C is configured to connect to a negative electrode of the power battery 13. The inverter circuit 122 includes a three-phase switching transistor bridge arm. Two ends of each switching transistor bridge arm are respectively connected to two ends of the bus capacitor C. Each bridge arm midpoint of each switching transistor bridge arm is configured to connect to one phase winding of the drive motor 11. A rotor position signal output end of the drive motor 11 is connected to a signal collection end of the control circuit 121. Two ends of the inverter circuit 122 are respectively connected to the positive electrode and the negative electrode of the power battery 13, to form a power battery pulse-heating loop.

For example, the control circuit 121 may include but is not limited to a central processing unit (central processing unit, CPU), another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The control circuit 121 may output a control signal to each bridge arm of the inverter circuit 122, to control a switch in each bridge arm to be turned on or turned off. The control signal may be a pulse width modulation (pulse width modulation, PWM) signal. For example, the control circuit 121 may be connected to gates of switching transistors of the three bridge arms in the inverter circuit 122, to control switching transistors in the inverter circuit 122 to be turned on or turned off. In some application scenarios, the control circuit 121 may generate control signals of switches of the three bridge arms with reference to a space vector pulse width modulation (space vector pulse width modulation, SVPWM) technology.

The following describes, with reference to a specific embodiment, a specific process in which the motor controller 12 performs high-frequency pulse-heating.

In response to that a temperature of the power battery 13 is greater than a specified temperature threshold, the motor controller 12 may normally start the drive motor 11. The three bridge arms in the inverter circuit 122 may convert a direct current provided by the power battery 13 into an alternating current, and provide the alternating current to the drive motor 11, so that the drive motor 11 outputs torque, to drive the wheel of the electric vehicle 10.

In response to that the temperature of the power battery 13 is not greater than the specified temperature threshold, the motor controller 12 sends the control signals to the three bridge arms, and bridge arm midpoints of the three-phase switching transistor bridge arm output a three-phase current to a winding of the drive motor, so that internal resistance of the power battery generates heat, to heat the power battery. In addition, in this application, frequencies of each phase current of the three-phase current in any two adjacent cycles are different.

Because the frequencies of each phase current in the any two adjacent cycles are different, it is equivalent that frequencies of each phase current flowing through the winding of the drive motor 11 are also different, and vibration frequencies generated by each winding under an action of a rapidly changing current are also different. Therefore, if the frequencies in the any two adjacent cycles are different, noise generated by the winding of the drive motor 11 in the two adjacent cycles also has at least two different frequencies. In addition, because duration of each cycle is quite short, noise energy generated by vibrations may be dispersed to a wide frequency range, so that noise perception at a specific frequency is mitigated, to provide better use experience for a user.

A bus current is formed by superimposing three phase currents. Therefore, an amplitude of each phase current determines an amplitude of the bus current. If amplitudes of each phase current of the three-phase current in the any two adjacent cycles may maintain the same, amplitudes of a magnitude of the bus current formed based on the superimposition of the three phase currents in the any two adjacent cycles may also maintain the same. If amplitudes of the bus current in the any two adjacent cycles may maintain the same, heating power of the power battery 13 is also stable under an action of the bus current, so that a heating process of the power battery 13 can be optimized.

To further reduce the noise, frequencies of each phase current of the three-phase current in a positive half-cycle and a negative half-cycle that are in one cycle may alternatively be different. If the frequencies of each phase current of the three-phase current in the positive half-cycle and the negative half-cycle that are in the one cycle are different, it indicates that frequencies of each phase current in one cycle may be different. Further, vibration frequencies of the winding of the drive motor 11 in the one cycle are also different. In this manner of this application, the noise energy generated by vibrations may be more evenly dispersed to a wide frequency range, so that noise perception at a specific frequency is further mitigated.

The control circuit 121 in the motor controller 12 is configured to: drive operating of an upper bridge arm switching transistor and a lower bridge arm switching transistor of each switching transistor bridge arm, and control bridge arm midpoints of the three-phase switching transistor bridge arm to output the three-phase current, where the frequencies of each phase current of the three-phase current in the any two adjacent cycles are different.

Because the frequencies of each phase current in the any two adjacent cycles are different, it is equivalent that frequencies of a phase current signal flowing through the winding are also different, and vibration frequencies generated by each winding under an action of a rapidly changing current are also different. Therefore, in this application, the noise energy generated by vibrations may be dispersed to a wide frequency range, so that noise perception at a specific frequency is mitigated, to provide better use experience for a user.

The control circuit 121 is configured to output a control signal to the inverter circuit 122. The control signal is used to control the inverter circuit 122 to output the three-phase current. The control signal is used to: indicate a frequency and an amplitude of a direct-axis current component of the three-phase current, and indicate that a quadrature-axis current component of the three-phase current is zero.

The control circuit 121 controls the bridge arm of the three-phase switching transistor bridge arm by using the control signal. The three bridge arms included in the inverter circuit 122 may be denoted as a U-phase bridge arm, a V-phase bridge arm, and a W-phase bridge arm. Still refer to FIG. 3. In the U-phase bridge arm, an upper bridge switching transistor is a switching transistor $Q_1$, and a lower bridge switching transistor is a switching transistor $Q_2$. In the V-phase bridge arm, an upper bridge switching transistor is a switching transistor $Q_3$, and a lower bridge switching transistor is a switching transistor $Q_4$. In the W-phase bridge arm, an upper bridge switching transistor is a switching transistor $Q_5$, and a lower bridge switching transistor is a switching transistor $Q_6$. One end of each bridge arm is configured to connect to one end of the power battery 13. To be specific, a collector of the switching transistor $Q_1$, a collector of the switching transistor $Q_3$, and a collector of the switching transistor $Q_5$ are connected to the one end of the power battery 13. The other end of each bridge arm is connected to the other end of the power battery 13. To be specific, an emitter of the switching transistor $Q_2$, an emitter of the switching transistor $Q_4$, and an emitter of the switching transistor $Q_6$ are connected to the other end of the power battery 13. Optionally, the one end of the power battery 13 may be a positive end of the power battery 13, and the other end of the power battery 13 may be a negative end of the power battery 13. Alternatively, the one end of the power battery 13 may be a negative end of the power battery 13, and the other end of the power battery 13 may be a positive end of the power battery 13.

Optionally, the upper bridge switching transistor may be an insulated gate bipolar transistor (insulated gate bipolar transistor, IGBT) and an anti-parallel diode thereof, a metal-oxide-semiconductor field-effect transistor (metal-oxide-semiconductor field-effect transistor, MOSFET), or the like. A specific structure inside the upper bridge switching transistor is not specifically limited in this application. Optionally, the lower bridge switching transistor may be an IGBT and an anti-parallel diode thereof, or an MOSFET. A specific structure inside the lower bridge switching transistor is not specifically limited in this application.

The control circuit 121 is configured to control, by using a control signal, an upper bridge switching transistor of one of the three bridge arms and lower bridge switching transistors of the other two bridge arms to be periodically turned on, so that the power battery 13, the one turned-on upper bridge switching transistor, a two-phase winding of the drive motor, and the two turned-on lower bridge switching transistors form a discharge loop. Internal resistance of the power battery 13 generates heat under an action of a current in the discharge loop, to heat the power battery 13. Alternatively, a lower bridge switching transistor of one of the three bridge arms and upper bridge switching transistors of the other two bridge arms are periodically turned on, so that the power battery 13, the one turned-on lower bridge switching transistor, the two-phase winding of the drive motor, and the two turned-on upper bridge switching transistors form a discharge loop. The internal resistance of the power battery 13 generates heat under an action of a current in the discharge loop, to heat the power battery 13.

The control signal is used to indicate a direct-axis current component and a quadrature-axis current component of the three-phase current. The direct-axis current component is used to control a direction and a strength of a magnetic field generated by the drive motor 11, and the quadrature-axis current component is used to control torque output by the drive motor 11. If it is expected to control bridge arm midpoints of the three-phase switching transistor bridge arm to output the three-phase current, and cause the frequencies of each phase current of the three-phase current in the any two adjacent cycles to be different, the frequency of the direct-axis current component needs to be specifically controlled.

As shown in FIG. 4, the control circuit 121 in the motor controller 12 includes a quadrature-axis current controller 401, a direct-axis current controller 402, and a drive circuit 403. In this embodiment of this application, the motor controller 12 is configured to: receive a heating instruction, and determine, based on heating power of the power battery 13 indicated by the heating instruction, that the quadrature-axis current controller 401 determines a quadrature-axis current component, and the direct-axis current controller 402 determines a direct-axis current component. The drive circuit 403 may include a Park transformation (Park's transmission) module and a Clarke transformation (Clarke's transmission) module. The Park transformation module is configured to convert two components in an $\alpha\beta$ coordinate system into a rotating orthogonal coordinate system (dq). The Clarke transformation module converts a time domain component of a three-phase system (in an abc coordinate system) into two components in a stationary orthogonal coordinate system ($\alpha\beta$). In this embodiment of this application, the Park transformation module receives a quadrature-axis voltage signal Uq and a direct-axis voltage signal Ud, performs inverse Park transformation on the signals Uq and Ud in the direct axis-quadrature axis coordinate system to obtain voltage signals U$\alpha$ and U$\beta$ in the $\alpha\beta$ coordinate system, and generates a control signal based on the U$\alpha$ and U$\beta$ signals, where the control signal is used to control a turned-on frequency and a duty cycle of the switching transistor of the inverter circuit 122.

The quadrature-axis current component is used to control torque output by the drive motor 11. In a high-frequency pulse-heating process of the power battery 13, if the quadrature-axis current component of the drive motor 11 is not less than a preset value, the drive motor 11 may generate unexpected torque output. The unexpected torque of the drive motor 11 is transmitted to the wheel 12, so that the electric vehicle 10 generates vibrations and noise, affecting ride experience of the electric vehicle 10. Therefore, the quadrature-axis current component of the three-phase current provided in this embodiment of this application is less than the preset value, to avoid affecting ride experience of the electric vehicle due to vibrations and noise generated through unexpected torque being transmitted to the wheel. Optionally, a brake caliper in an electronic parking brake (electrical park brake, EPB) system in the electric vehicle 10 may be in a locked state, to ensure that the wheel of the electric vehicle 10 does not move.

The direct-axis current component is used to control the direction and the strength of the magnetic field generated by the drive motor 11. The direction and the strength of the magnetic field generated by the drive motor 11 are controlled, so that a magnitude and a direction of the bus current can be adjusted, to adjust heating power of the power battery 13 and eliminate noise in a heating process. Specifically, the direct-axis current component may be determined based on heating power of the power battery 13 indicated by a heating instruction. The direct-axis current component includes two parts of parameters: one part is a frequency and an amplitude of the direct-axis voltage, and the other part is a bias of the direct-axis voltage. Optionally, the direct-axis current component may include a voltage reference signal and a direct-axis bias signal. The voltage reference signal is used to indicate a frequency and an amplitude of a voltage, and the direct-axis bias signal is used to enable the voltage to generate a direct current bias. To be specific, the motor controller finally inputs the direct-axis voltage signal having the direct current bias to the drive circuit 403, to enable the drive circuit 403 to generate a control signal based on the direct-axis voltage signal, and drive the drive motor 11 by using the control signal. The direct-axis voltage signal having the direct current bias can improve an effective value of the three-phase current of the drive motor 11 to improve heating efficiency of the power battery. It should be noted that the direct current bias of the direct-axis voltage signal may be a positive direct current bias, or may be a negative direct current bias. A person in the art may separately set the direct current bias according to a requirement for heating power.

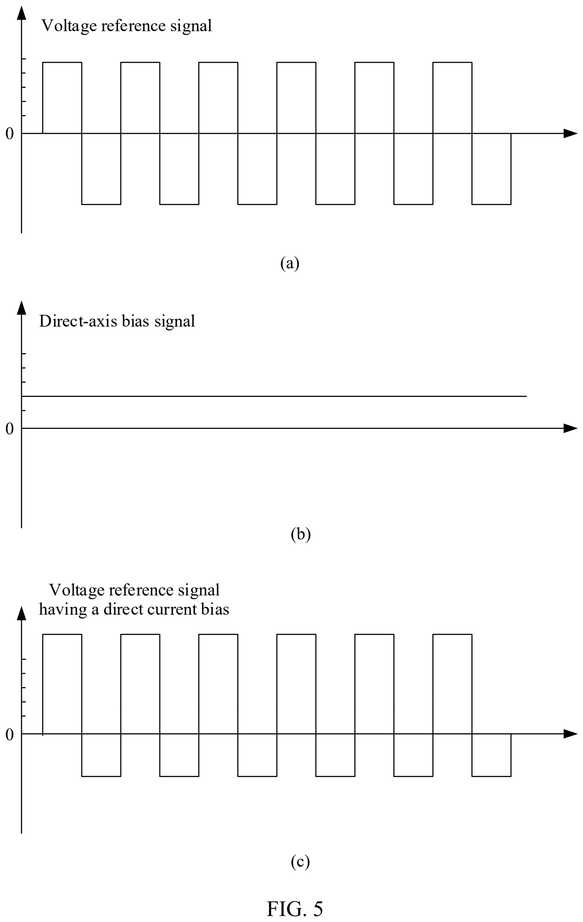

(a) in FIG. 5 is a diagram of a waveform of the voltage indicated by the voltage reference signal, and an example in which a waveform of the voltage reference signal is a square wave is used. (b) in FIG. 5 is a diagram of a waveform of a bias voltage indicated by the direct-axis bias signal. (c) in FIG. 5 is a diagram of a waveform of the voltage reference signal having the direct current bias. The waveform shown by (c) in FIG. 5 is formed by superimposing the voltage signal in (a) in FIG. 5 and (b) in FIG. 5.

To cause frequencies of each phase current in the any two adjacent cycles to be different, the voltage reference signal in the direct-axis current component of the three-phase current needs to be set to different frequencies in the any two adjacent cycles. The direct-axis current component of the three-phase current is related to a voltage reference signal input by the drive circuit. Therefore, if the voltage reference signal has at least two different frequencies in the any two adjacent cycles, frequencies of the direct-axis current component of the three-phase current in the any two adjacent cycles may be different.

The voltage reference signal may include signals of various frequencies. In a possible implementation, the voltage reference signal includes a first direct-axis current signal and a second direct-axis current signal. Frequencies of the first direct-axis current signal and the second direct-axis current signal are different. In addition, the voltage reference signal includes at least one of the following types: a sine wave, a triangular wave, and a square wave. A person skilled in the art may determine a type of the voltage reference signal based on a magnitude of a ripple current of a pulse alternating current and heating efficiency. This is not specifically limited herein.

Optionally, a signal type of the voltage reference signal in a first cycle of the two adjacent cycles may be a first direct-axis current signal, and a signal type of the voltage reference signal in a second cycle of the two adjacent cycles may be a second direct-axis current signal. Alternatively, a signal type of the voltage reference signal in a first cycle of the two adjacent cycles may be a second direct-axis current signal, and a signal type of the voltage reference signal in a second cycle of the two adjacent cycles may be a first direct-axis current signal. As a result, the voltage reference signal has two different frequencies in the any two adjacent cycles, so that the frequencies of each phase current of the three-phase current in the any two adjacent cycles are different.

It should be noted that, to ensure heating efficiency, even if the frequencies of the first direct-axis current signal and the second direct-axis current signal are different, volt-second products of the first direct-axis current signal and the second direct-axis current signal still need to be the same. A volt-second product of a signal is an integral of the signal, and represents accumulation of the signal over time. The volt-second product may also be referred to as a voltage-time integral, and is used to describe an accumulated value of energy or an amplitude of the signal over a period of time. The volt-second product of the signal may be expressed in the following integral form: volt-second product = $\int$ (signal amplitude) x (time) dt, where the integral is performed from a start time to an end time. The volt-second product can be used to measure energy consumption or accumulation of the signal over the period of time. A volt-second product of a periodic signal can be calculated to analyze average energy of the signal. Therefore, it may be understood that, when frequencies of the first direct-axis current signal and the second direct-axis current signal are different, and amplitudes of the first direct-axis current signal and the second direct-axis current signal are also different, the volt-second products of the first direct-axis current signal and the second direct-axis current signal can be caused to be the same. As a result, a heating process of the power battery 13 is optimized, and stability of heating power of the power battery 13 is ensured.

Further, to mitigate noise perception at a specific frequency, a current signal of the voltage reference signal in any cycle is any one of the following: a first type of signal, a second type of signal, a third type of signal, and a fourth type of signal. The first type of signal is the first direct-axis current signal. The second type of signal is the second direct-axis current signal. The third type of signal is a signal formed by a positive half-cycle of the first direct-axis current signal and a negative half-cycle of the second direct-axis current signal. The fourth type of signal is a signal formed by a negative half-cycle of the first direct-axis current signal and a positive half-cycle of the second direct-axis current signal.

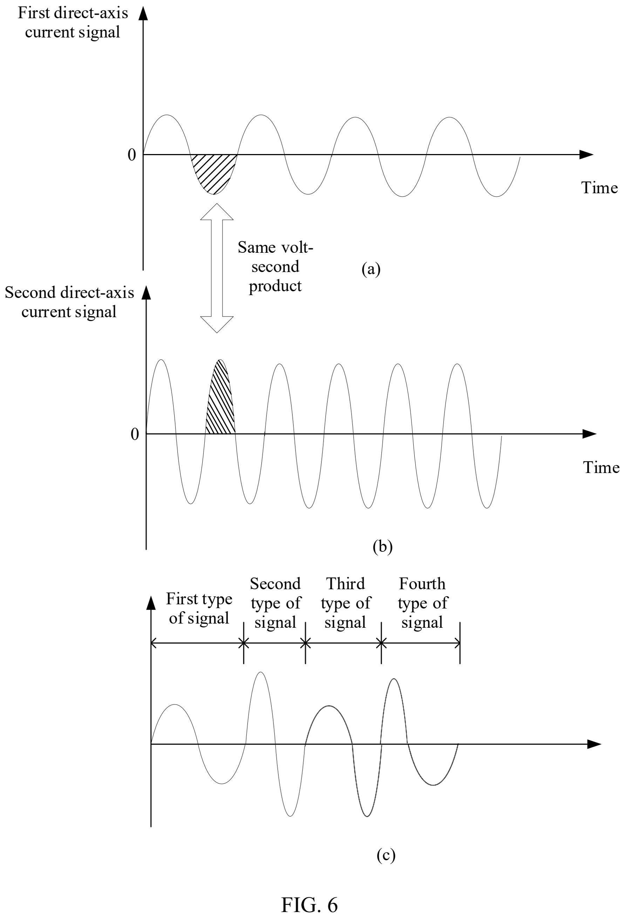

(a) in FIG. 6 is a diagram of a waveform of the first direct-axis current signal. (b) in FIG. 6 is a diagram of a waveform of the second direct-axis current signal. (c) in FIG. 6 is a diagram of waveforms of the first type of signal to the fourth type of signal. An example in which a waveform of a voltage signal is a sine wave is used. The first type of signal to the fourth type of signal in (c) in FIG. 6 are combinations of the first direct-axis current signal and the second direct-axis current signal.

Current signals of a direct-axis current of the three-phase current in the any two adjacent cycles are any two of the following: the first type of signal, the second type of signal, the third type of signal, and the fourth type of signal. In this case, after the four types of signals are preset, random concatenation may be performed in the any two adjacent cycles. Optionally, any two types of signals are randomly selected from the four types of signals by using a random function RAND to complete combination and concatenation, so that the frequencies of each phase current of the three-phase current in the any two adjacent cycles are different.

It should be noted that the voltage reference signal may further include more direct-axis current signals of different frequencies. For example, if the voltage reference signal includes N types of direct-axis current signals of different frequencies, the N types of direct-axis current signals of different frequencies may be combined to form 2N different types of signals, and current signals of the voltage reference signal in the any adjacent cycles include any two of the 2N types of signals.

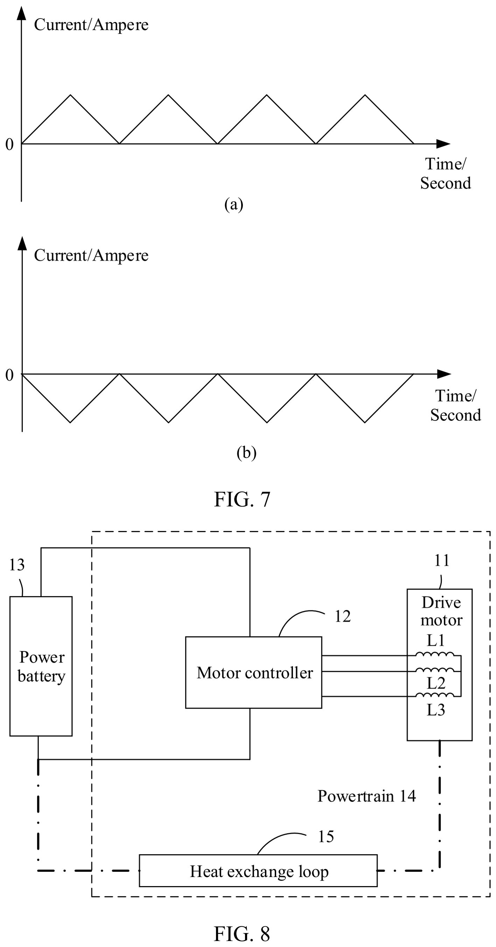

In embodiments of this application, a waveform of each phase current of the three-phase current of the drive motor 11 is a unipolar waveform. The unipolar waveform means that a direction of each phase current of the drive motor remains unchanged. An example in which the unipolar waveform is a triangular wave is used. FIG. 7 is a diagram of the unipolar waveform. A current in (a) in FIG. 7 keeps greater than zero, and a current in (b) in FIG. 7 keeps less than zero.

In one positive and negative cycle of an alternating current, a unipolar triangular wave can maximize energy stored and released by inductance of a three-phase winding of the motor in this cycle. This effectively improves an effective value of a pulse-heating current, and increases heating power.

As shown in FIG. 8, the powertrain provided in embodiments of this application includes a heat exchange loop 15. According to thermal effect of a current, the three-phase current on the drive motor 11 may enable the three-phase winding of the drive motor 11 to heat up. The powertrain 14 provided in this embodiment of this application includes the heat exchange loop 15. The heat exchange loop 15 is configured to conduct heat generated on the three-phase winding of the drive motor 11 to the power battery 13 to heat the power battery 13. According to the powertrain provided in this embodiment of this application, the heat exchange loop is disposed to conduct, to the power battery, heat generated on the winding of the drive motor in a pulse-heating process of the power battery, to improve energy utilization efficiency, save energy, and improve heating efficiency of the power battery.

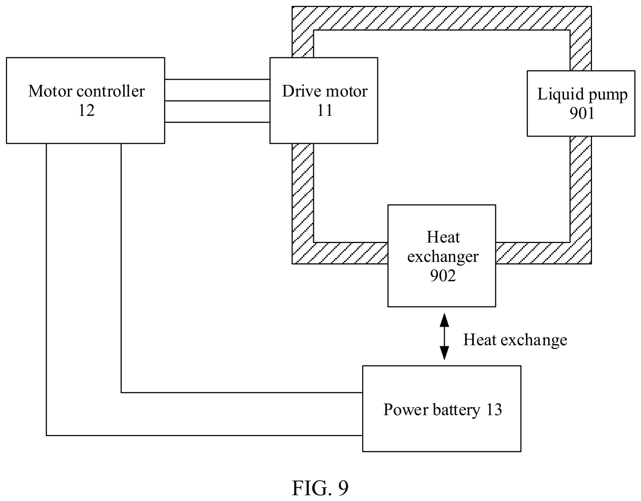

In an embodiment, as shown in FIG. 9, the heat exchange loop 15 includes a heat transfer medium, a heat transfer medium flow loop, a liquid pump 901, and a heat exchanger 902. The heat transfer medium is configured to absorb the heat generated on the winding of the drive motor 11. The heat transfer medium flows in the heat transfer medium flow loop. The liquid pump 901 is configured to provide power for flow of the heat transfer medium. The heat exchanger 902 is configured to absorb the heat in the heat transfer medium and conduct the absorbed heat in the heat transfer medium to the power battery 13 to heat the power battery 13.

A person of ordinary skill in the art may understand that various numbers such as "first" and "second" in this application are merely used for differentiation for ease of description, and are not used to limit the scope and the sequence of embodiments of this application. The execution sequence of the processes should be determined according to functions and internal logic of the processes.

A person of ordinary skill in the art may be aware that, the modules in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each specific application, but it should not be considered that the implementation goes beyond the scope of this application.

It is clear that a person skilled in the art can make various modifications and variations to this application without departing from the spirit and scope of this application. This application is intended to cover these modifications and variations of this application provided that they fall within the scope of protection defined by claims and their equivalent technologies.

## Claims

1. A motor controller for pulse-heating a power battery of an electric vehicle, wherein the motor controller comprises an inverter circuit, the inverter circuit comprises a three-phase switching transistor bridge arm, a bridge arm midpoint of each phase switching transistor bridge arm is configured to connect to one phase winding of a drive motor, the inverter circuit is configured to connect to the power battery through a direct current bus, and the motor controller is configured to:

   control bridge arm midpoints of the three-phase switching transistor bridge arm of the inverter circuit to be configured to output a three-phase current to a winding of the drive motor, wherein the three-phase current is used to generate a pulse alternating current on the direct current bus, and the pulse alternating current is used to heat the power battery; and
   control frequencies of each phase current of the three-phase current in any two adjacent cycles to be different.

2. The motor controller according to claim 1, wherein the motor controller is configured to control amplitudes of each phase current of the three-phase current in the any two adjacent cycles to be the same.

3. The motor controller according to claim 1 or 2, wherein the motor controller is configured to control frequencies of each phase current of the three-phase current in a positive half-cycle and a negative half-cycle that are in one cycle to be different.

4. The motor controller according to any one of claims 1 to 3, wherein the motor controller is configured to control a waveform of each phase current of the three-phase current to be a unipolar waveform.

5. The motor controller according to claim 1, wherein frequencies of the pulse alternating current in the any two adjacent cycles are different.

6. The motor controller according to claim 5, wherein amplitudes of different bus currents in the any two adjacent cycles are the same.

7. The motor controller according to any one of claims 1 to 6, wherein frequencies of a direct-axis current component of the three-phase current in the any two adjacent cycles are different.

8. The motor controller according to claim 7, wherein the direct-axis current component of the three-phase current has a direct current bias, and the direct current bias is a positive direct current bias or a negative direct current bias.

9. The motor controller according to claim 7 or 8, wherein volt-second products of the direct-axis current signals of different frequencies are the same.

10. The motor controller according to any one of claims 7 to 9, wherein the direct-axis current signals of different frequencies comprise at least one of the following types: a sine wave, a triangular wave, and a square wave.

11. The motor controller according to any one of claims 7 to 10, wherein the direct-axis current signals of different frequencies comprise a first direct-axis current signal and a second direct-axis current signal, frequencies of the first direct-axis current signal and the second direct-axis current signal are different, and volt-second products of the first direct-axis current signal and the second direct-axis current signal are the same.

12. The motor controller according to claim 11, wherein a current signal of the direct-axis current component of the three-phase current in any cycle is any one of the following: a first type of signal, a second type of signal, a third type of signal, and a fourth type of signal, wherein

the first type of signal is the first direct-axis current signal;
the second type of signal is the second direct-axis current signal;
the third type of signal is a signal formed by a positive half-cycle of the first direct-axis current signal and a negative half-cycle of the second direct-axis current signal; and
the fourth type of signal is a signal formed by a negative half-cycle of the first direct-axis current signal and a positive half-cycle of the second direct-axis current signal.

13. The motor controller according to claim 12, wherein current signals of a direct-axis current of the three-phase current in the any two adjacent cycles are any two of the following: the first type of signal, the second type of signal, the third type of signal, and the fourth type of signal.

14. The motor controller according to any one of claims 1 to 13, wherein a quadrature-axis current component of the three-phase current is less than a preset value, and the three-phase current causes torque output by the drive motor to be less than a preset torque value.

15. The motor controller according to any one of claims 1 to 14, wherein the motor controller comprises a control circuit, the control circuit is configured to output a control signal to the inverter circuit, and the control signal is used to control the inverter circuit to output the three-phase current; and
the control signal is used to: indicate a frequency and an amplitude of the direct-axis current component of the three-phase current, and indicate that the quadrature-axis current component of the three-phase current is zero.

16. The motor controller according to any one of claims 1 to 15, wherein the motor controller is configured to:
in response to that a temperature of the power battery is less than a preset value, the motor controller is configured to output the three-phase current, wherein the three-phase current is used to generate the pulse alternating current on the direct current bus, and the pulse alternating current is used to heat the power battery.

17. A powertrain, wherein the powertrain comprises the motor controller according to any one of claims 1 to 16 and a heat conduction apparatus, the three-phase current is used to heat a winding of the drive motor, and the heat conduction apparatus is configured to conduct heat generated by the winding of the drive motor to the power battery.

Electric vehicle 10

FIG. 1

FIG. 2

Motor controller 12

Control circuit 121

13

Power battery

C

Q1 D1
Q3 D3
Q5 D5

U
V
W

11

U
V
W

Q2 D2
Q4 D4
Q6 D6

Inverter circuit 122

FIG. 3

Quadrature-axis current component → Quadrature-axis current controller 401 → Uq

Direct-axis current component → Direct-axis current controller 402 → Ud

Drive circuit 403

Inverter circuit 122

Drive motor 11

FIG. 4

(a)

(b)

(c)

FIG. 5

First direct-axis
current signal

0

Time

Same volt-
second
product

(a)

Second direct-axis
current signal

0

Time

(b)

First type
of signal

Second
type of
signal

Third
type of
signal

Fourth
type of
signal

(c)

FIG. 6

FIG. 7

FIG. 8

FIG. 9

## INTERNATIONAL SEARCH REPORT

| | International application No. |
|---|---|
| | **PCT/CN2024/081996** |

### A. CLASSIFICATION OF SUBJECT MATTER

H02P21/22(2016.01)i; H01M10/615(2014.01)i

According to International Patent Classification (IPC) or to both national classification and IPC

### B. FIELDS SEARCHED

Minimum documentation searched (classification system followed by classification symbols)

IPC:H02P,H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 车, 电机, 电动机, 马达, 电池, 加热, 噪声, 噪音, 振动, 频率, 周期, 不同, 差异, 相异, 偏移, 偏差, vehicle, motor, batter+, heat+, noise, vibrat+, frequency, cycle, differen+, offset

### C. DOCUMENTS CONSIDERED TO BE RELEVANT

| Category* | Citation of document, with indication, where appropriate, of the relevant passages | Relevant to claim No. |
|---|---|---|
| Y | CN 116278788 A (BEIJING JIDU TECHNOLOGY CO., LTD.) 23 June 2023 (2023-06-23) description, paragraphs [0032]-[0174], and figures 1-8 | 1-17 |
| Y | CN 113002366 A (CHONGQING CHANG'AN NEW ENERGY AUTOMOBILE TECHNOLOGY CO., LTD.) 22 June 2021 (2021-06-22) description, paragraphs [0031]-[0062], and figures 1-7 | 1-17 |
| Y | CN 115910001 A (HUNAN TECHNOLOGY (SHANGHAI) CO. LTD.) 04 April 2023 (2023-04-04) description, paragraphs [0049]-[0087], and figures 1-3 | 1-17 |
| Y | CN 116176364 A (ZHENQU TECHNOLOGY (SHANGHAI) CO., LTD.) 30 May 2023 (2023-05-30) description, paragraphs [0044]-[0074], and figures 1-4 | 1-17 |
| A | CN 112977173 A (CHONGQING CHANG'AN NEW ENERGY AUTOMOBILE TECHNOLOGY CO., LTD.) 18 June 2021 (2021-06-18) entire document | 1-17 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 May 2024** | **20 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/081996**

### C.    DOCUMENTS CONSIDERED TO BE RELEVANT

| Category* | Citation of document, with indication, where appropriate, of the relevant passages | Relevant to claim No. |
|---|---|---|
| A | CN 113098360 A (GUANGZHOU AUTOMOBILE GROUP CO., LTD.) 09 July 2021 (2021-07-09) <br> entire document | 1-17 |
| A | CN 115668589 A (NINGDE CONTEMPORARY AMPEREX TECHNOLOGY CO., LTD.) 31 January 2023 (2023-01-31) <br> entire document | 1-17 |
| A | US 2023207916 A1 (IONTRA INC.) 29 June 2023 (2023-06-29) <br> entire document | 1-17 |

## INTERNATIONAL SEARCH REPORT
### Information on patent family members

International application No.

**PCT/CN2024/081996**

| Patent document cited in search report | | | Publication date (day/month/year) | Patent family member(s) | | | Publication date (day/month/year) |
|---|---|---|---|---|---|---|---|
| CN | 116278788 | A | 23 June 2023 | None | | | |
| CN | 113002366 | A | 22 June 2021 | None | | | |
| CN | 115910001 | A | 04 April 2023 | None | | | |
| CN | 116176364 | A | 30 May 2023 | None | | | |
| CN | 112977173 | A | 18 June 2021 | None | | | |
| CN | 113098360 | A | 09 July 2021 | None | | | |
| CN | 115668589 | A | 31 January 2023 | None | | | |
| US | 2023207916 | A1 | 29 June 2023 | WO | 2023164082 | A1 | 31 August 2023 |

Form PCT/ISA/210 (patent family annex) (July 2022)

**REFERENCES CITED IN THE DESCRIPTION**

**Patent documents cited in the description**

- CN 202310957910

- CN 202311487424